Europäisches Patentamt

European Patent Office

Office européen des brevets

(11) Veröffentlichungsnummer: **0 366 957**

**A1**

(12) # EUROPÄISCHE PATENTANMELDUNG

(21) Anmeldenummer: 89118334.5

(51) Int. Cl.5: **B67C 3/24** , **B08B 9/42**

(22) Anmeldetag: 03.10.89

(30) Priorität: 03.11.88 DE 3837393

(43) Veröffentlichungstag der Anmeldung:
09.05.90 Patentblatt 90/19

(84) Benannte Vertragsstaaten:
AT CH DE ES FR GB LI

(71) Anmelder: **OTTO SICK GMBH**
**Bundesstrasse 3 Haus Nr. 6**
**D-7830 Emmendingen-Mundingen(DE)**

(72) Erfinder: **Hildebrand, Klaus**
**Hölderlinstrasse 40**
**D-7830 Emmendingen(DE)**

(74) Vertreter: **Münzhuber, Robert, Dipl.-Phys. et al**
**Patentanwalt Rumfordstrasse 10**
**D-8000 München 5(DE)**

(54) **Puffertisch.**

(57) Es wird ein Puffertisch zum Zwischenspeichern von Getränkeflaschen, die auf einer ersten Transportbahn (10) stehen, zugeführt und auf einer zweiten Transportbahn (11) stehend weitertransportiert werden, der aus einer langgestreckten, die beiden Transportbahnen miteinander verbindenden Tischplatte (13) und die Tischplatte in zur Tischplattenebene vertikale Rüttelbewegungen versetzende Querwalzen (15) besteht, wobei die Tischplatte von der ersten zur zweiten Förderbahn schräg nach unten abfällt.

FIG.1

EP 0 366 957 A1

## Puffertisch

Bei Reinigungs-, Füll-, Verschließ- oder Sortieranlagen für Hohlglasflaschen der Getränkeindustrie besteht häufig das Bedürfnis, eine Zwischenspeicherung der Flaschen vorzunehmen, etwa wenn es in einer der Maschinen der Anlage zu einem Flaschenstau kommt, wenn nacheinander unterschiedliche Flaschensorten zur Anwendung kommen sollen und dergleichen. Eine befriedigende Lösung für die Zwischenspeicherung stehender Hohlglasflaschen ist jedoch bisher noch nicht gefunden worden. Aufgabe der vorliegenden Erfindung ist es deshalb, eine Einrichtung zur Zwischenspeicherung stehender Hohlglasflaschen zu schaffen, die bei gegebenen Abmessungen eine hohe Speicherkapazität gewährleistet und eine möglichst geräuscharme und staudruckarme Einspeicherung und Ausspeicherung der Flaschen ermöglicht.

Die Lösung der gestellten Aufgabe besteht in dem Puffertisch gemäß Patentanspruch 1. Besonders zweckmäßige Ausgestaltungen dieses Puffertischs sind dann in den Unteransprüchen gekennzeichnet.

Auf der Zeichnung ist eine Ausführungsform der Erfindung beispielsweise dargestellt. Es zeigen:

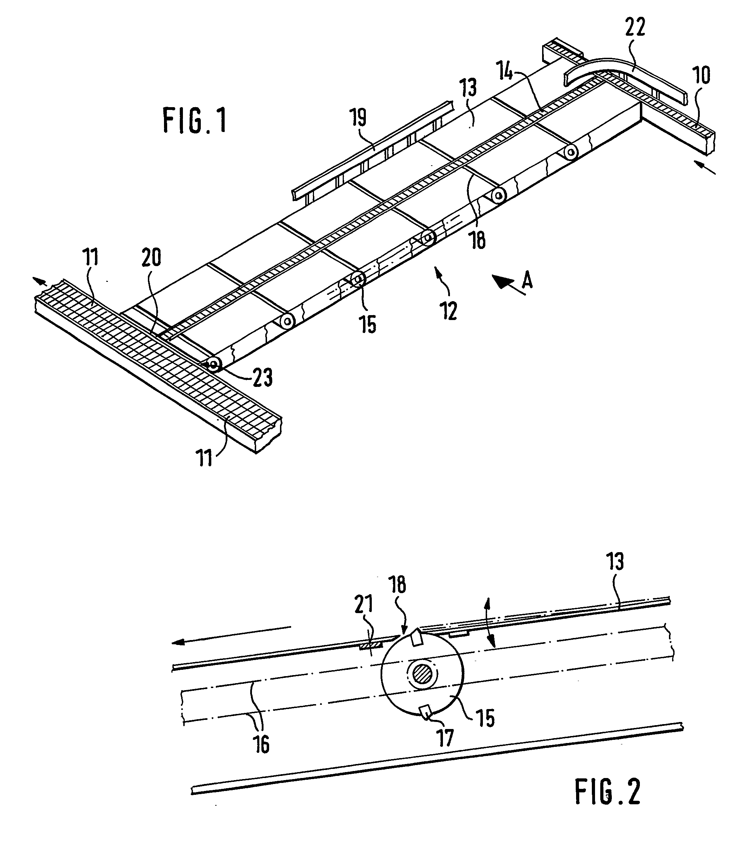

Fig. 1 schematisch den Puffertisch in perspektivischer Darstellung, und

Fig. 2 eine Teilskizze, in Richtung des Pfeils A von Fig. 1 gesehen, zur Erläuterung des Tischantriebs.

Auf der Zeichnung ist mit 10 ein zuführendes Flaschentransportband und mit 11 ein weiterführendes Flaschentransportband bezeichnet. Diese beiden Transportbänder 10,11 werden durch den im ganzen mit 12 bezeichneten Puffertisch verbunden. Der Puffertisch weist eine Tischplatte 13 in Form eines langgestreckten Rechtecks auf, besteht aus Metall oder Kunststoff und ist so ausgebildet, daß sie zwar einerseits dem Gewicht der auf ihr zwischengespeicherten Flaschen zu widerstehen vermag, andererseits aber eine begrenzte elastische Biegefähigkeit besitzt. In der mittleren Längsachse der Tischplatte 13 befindet sich eine Scharnierkette 14. Unterhalb der Tischplatte sind in gleichmäßigen Abständen Querwalzen 15 angeordnet, die gemeinsam über einen Kettentrieb 16 in Umdrehung versetzbar sind und auf ihrer Oberfläche an zueinander diagonalen Stellen Nocken 17 tragen. Die Walzen 15 ragen mit einem schmalen Bereich ihrer Oberfläche durch Querschlitze 18 der Tischplatte 13, wie dies am besten aus Fig. 2 ersichtlich ist. Die Langseiten der Tischplatte 13 werden durch Geländer begrenzt, wie dies bei 19 angedeutet ist. Mit 20 ist ein versenkbarer Anschlag am Tischende bezeichnet. Bei 21 schließlich sind Sprühdüsen angedeutet.

Wesentlich ist nun, daß die Tischplatte 13 gegenüber der Horizontalen eine Anstellung aufweist, d.h., vom Transportband 10 zum Transportband 11 hin unter einem vorgegebenen Winkel abfällt, beispielsweise einem Winkel von 7°. Zum Betrieb des Puffertischs 12 wird ein - nicht gezeichneter - Motor eingeschaltet, der über den Kettentrieb 16 die Walzen 15 in Umdrehung und <iie Scharnierbandkette 14 in Lauf (in Richtung vom Band 10 zum Band 11) setzt. Werden nun auf dem Transportband 10 Flaschen zugeführt, so werden diese durch eine gekrümmte Führungsfläche 24 auf die Scharnierbandkette 14 gelenkt und gelangen auf dieser zum Transportband 11, von welchem sie weitergefördert werden. Gibt es nun auf dem Flaschentransportband 11 einen Rückstau oder wird der Anschlag 20 in Anschlagstellung gebracht, dann bilden die Flaschen auf der Tischplatte 13 einen traubenförmigen Rückstau, d.h., sie gelangen von der Scharnierbandkette 14 in seitlicher Richtung auf die eine Gleitfläche darstellende Tischplatte 14 und gleiten auf dieser in Richtung nach unten. Das Gleiten wird dadurch bewirkt, daß die Nocken 17 der sich drehenden Walzen 15 die Tischplatte 13 sanft anheben und (bei Erreichen des Querspalts 18) abrupt absenken, die Tischplatte 13 also in eine Rüttelbewegung versetzt wird, welche die Flaschen auf der schiefen Ebene der Tischplatte 13 zum Gleiten bringt. Die Neigung der Tischplatte und deren Oberflächenbeschaffenheit werden nämlich zweckmäßigerweise so ausgelegt, daß die Flaschen bei sich nicht drehenden Walzen 15 gerade noch nicht zum gleiten kommen, wobei auch die durch die Schlitze 18 hindurchgreifenden, rau ausgebildeten Oberflächen der Walzen 15 dazu beitragen, daß die Flaschen stehenbleiben. Bei sich drehenden Walzen jedoch erfolgt, wie erwähnt, ein Gleiten nach unten, und der Flaschenstau auf der Tischplatte 13 setzt sich fort, bis die gesamte Tischplatte 13 mit Flaschen angefüllt ist.

Die Aufnahmekapazität des Puffertischs 12 richtet sich nach dessen Abmessungen. So kann beispielsweise ein Tisch mit einer Länge von 1800 cm und einer Breite von 200 cm etwa 5000 Flaschen (Durchmesser 90mm) aufnehmen. Ist die Aufnahmekapazität des Tisches erreicht, wird der motorische Antrieb abgeschaltet.

Sobald der Stau auf dem Transportband 11 beendet bzw. der Anschlag 20 wieder abgesenkt ist, wird der Motorantrieb des Puffertischs 12 wieder eingeschaltet, und der Tisch entleert sich über das Transportband 11. Durch flüssiges Gleitmittel kann eine Optimierung im Gleitverhalten der Flaschen auf dem Puffertisch erreicht werden. Das Gleitmittel wird durch die Düsen 21 auf den Tisch gesprüht, in einer Rinne 23 am unteren Ende des Tischs 12 aufgefangen und wieder zurückgepumpt.

Selbstverständlich sind gegenüber dem dargestellten Ausführungsbeispiel zahlreiche Abwandlungen möglich, ohne den Bereich der Erfindung zu verlassen. So kann beispielsweise das Transportband 10 mit Gleitfläche 22 durch eine entsprechend gekrümmte Scharnierbandkette ersetzt werden. Eine zweckmäßige Ausgestaltung besteht auch darin, den einfachen Anschlag 20 durch einen etwa halbkreisförmig oder trichterförmig gestalteten Anschlag zu ersetzen, der nur an seiner untersten, an das Transportband 11 anschließenden Stelle einen Flaschendurchlaß ermöglicht; damit ergibt sich ein sehr kontinuierlicher Entleerungsvorgang des Tischs 12 nach Beendigung der Staubedingungen. Die Zahl der Nocken 17 je Walze 15 kann variiert und den jeweiligen Gegebenheiten angepasst werden. Dasselbe gilt für die Abmessungen und die Schrägneigung des Tischs 12, wobei zweckmäßigerweise der Tisch so ausgebildet ist, daß seine Neigung kontinuierlich oder stufenweise verstellbar ist. Die genaue Funktion des Puffertischs kann mittels elektronischer Stauabfragung optimiert werden.

Die Vorteile des Puffertischs liegen in der im Vergleich zu seinen Abmessungen großen Speicherkapazität, dem geringen Lärm und Staudruck bei der Speicherung bzw. Entspeicherung, dem vergleichsweise geringen Bauaufwand und der einfachen Steuermöglichkeit. Ein weiterer Vorteil liegt in der vielseitigen Anwendbarkeit.

## Ansprüche

1. Puffertisch zum Zwischenspeichern stehender Hohlglasflaschen bei Reinigungs- , Füll-, Verschließ-und/oder Sortieranlagen der Getränkeindustrie, bestehend aus einer langgestreckten, vertikal zur Plattenebene begrenzt elastisch verformbaren Tischplatte (13), die eine erste, die Flaschen zuführende Förderbahn (10) mit einer zweiten, die Flaschen weitertransportierenden Förderbahn (11) verbindet und unter einem geringen Neigungswinkel von der ersten zur zweiten Förderbahn schräg nach unten abfällt, und aus unterhalb der Tischplatte angebrachten Querwalzen (15), die an der Plattenunterseite angreifen und bei ihrer Umdrehung die Tischplatte in wellenartige Rüttelbewegungen versetzen.

2. Puffertisch nach Anspruch 1, dadurch gekennzeichnet, daß die Tischplatte 13 einen Neigungswinkel zwischen 5 und 9° aufweist.

3. Puffertisch nach Anspruch 1 oder 2, dadurch gekennzeichnet, daß in der mittleren Längsachse der Tischplatte (13) eine Scharnierbandkette (14) angeordnet ist, wobei Scharnierbandkette (14) und Querwalzen (15) von einem gemeinsamen Motor angetrieben sind.

4. Puffertisch nach einem der Ansprüche 1 bis 3, dadurch gekennzeichnet, daß die Querwalzen (15) an ihrer Oberfläche Nocken (21) aufweisen.

5. Puffertisch nach Anspruch 4, dadurch gekennzeichnet, daß die Tischplatte (13) über den Querwalzen (15) mit Durchtrittsspalten (18) für die Walzennocken (21) versehen ist.

6. Puffertisch nach einem der Ansprüche 1 bis 5, dadurch gekennzeichnet, daß er an seinen Langseiten mit Begrenzungsgeländern (19) und an seiner unteren Stirnseite mit einer versenkbaren Anschlagleiste (20) versehen ist.

7. Puffertisch nach Anspruch 6, dadurch gekennzeichnet, daß die Anschlagleiste halbkreisförmige- oder trichterförmige Gestalt aufweist.

8. Puffertisch nach einem der Ansprüche 1 bis 7, dadurch gekennzeichnet, daß er neigungsverstellbar ausgebildet ist.

FIG.1

FIG.2

EP 89118334.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) 5 |
|---|---|---|---|
| A | US - A - 4 060 166 (HARTNESS) * Anspruch 1; Spalte 3, Zeilen 38-84; Fig. 2,3 * -- | 1,4,6 | B 67 C 3/24 B 08 B 9/42 |
| A | DE - A1 - 3 609 757 (KRONES AG) * Spalte 5, Zeilen 10-12; Fig. 1 * -- | 2,8 | |
| A | US - A - 2 861 670 (READ et al.) * Anspruch 5; Fig. 6-8 * ---- | 6 | |

RECHERCHIERTE SACHGEBIETE (Int. Cl.4)

B 67 C 1/00
B 67 C 3/00
B 67 C 7/00
B 67 C 9/00
B 65 G 27/00

Der vorliegende Recherchenbericht wurde für alle Patentansprüche erstellt.

| Recherchenort | Abschlußdatum der Recherche | Prüfer |
|---|---|---|
| WIEN | 03-01-1990 | BISTRICH |